# EUROPEAN PATENT SPECIFICATION

(11) **EP 4 324 424 B1**
(45) Date of publication and mention of the grant of the patent: **11.12.2024**
(21) Application number: 22204148.5
(22) Date of filing: 27.10.2022
(51) Int. Cl.: A61C 8/00

(54) **DENTAL SELF-TAPPING DEVICE**
DENTALE SELBST-GEWINDESCHNEIDENDE VORRICHTUNG
APPAREIL DENTAIRE AUTO-TARAUDANT

(30) Priority: 16.08.2022 EP 22190566
(43) Date of publication of application: 21.02.2024
(73) Proprietor: EDUINVENT LM S.R.L., Judet IIfov (RO)
(72) Inventor: Steigmann, Marius, 68163 Mannheim (DE)
(74) Representative: Vasilescu, Raluca

(56) References cited:
- US-A1- 2015 297 321

## Description

The invention relates to a dental self-tapping device having a body with a longitudinal axis, the body comprising a core and a thread formed thereon, in which thread a flute running spirally around the core is formed at an angle with the longitudinal axis.

The invention further relates to a set comprising at least two dental self-tapping devices.

The term dental self-tapping device is understood to mean a dental implant as well as a dental tapping drill bit for pre-drilling a bore for a dental implant.

When placing dental implants, it is of paramount importance that the implant is properly anchored in the bone. For this purpose, so-called self-tapping implants are used.

Self-tapping implants are designed to be screwed directly into the bone during surgery. First the implantation site is exposed then a hole is drilled into the bone. The implant and a driver mount connected thereto are moved to the implantation site and the apical end of the implant is driven into the bore. As the implant is driven (rotated), it simultaneously taps threads in the bone and is thereby screwed into these threads.

A typical self-tapping implant has an apical end which taps the threads into the bone and a proximal end for connection with an abutment designed to support a dental prosthesis. The apical end is usually provided with one or more flutes provided with a cutting edge.

The implant body generally comprises an internal passage which is on the one hand designed to cooperate with a connection portion of a cover- or healing screw, and on the other hand - after removing the healing screw - with an abutment designed to support a dental prosthesis.

The self-tapping flute is conventionally created by milling parallel to the longitudinal axis of the implant. A flattened surface is formed on each side of the flute where the flute meets the thread formed on the external surface of the implant. As the implant is driven into the bore, the bone chips collect in the flute and the flattened surface compresses the bone chips as the bone chips are pushed forward, whereby the bone chips do not need to be removed, moreover, the compressed bone chips entering the flute increase stability.

However, the inventor of the present invention recognised that, despite the above function, the flattened surface of the conventional straight flute also has a disadvantage, as the flattened surface does not cut the bone while the implant is driven, instead it fractures it, making it more difficult for the living bone tissue to heal and osseointegrate with the implant.

Spiral flutes are also used, but in case of the existing implants the spiral flutes only slightly improve the self-tapping properties of the implant. An example of an implant with a spiral flute is shown in patent EP 3 102 145 B1. According to this solution the cross-section of the flute perpendicular to the longitudinal axis of the implant has a wider inner portion and a bottle neck shaped outer portion, which the patentee in his commercial activities refers to as the shape of a lion's claw. The inventor of the present invention, however, recognized that the lion claw-like design (bottle neck profile) is rather disadvantageous, since the internally curved edges do not participate in the self-tapping, here the cutting surface that is perpendicular to the tangential direction of travel of the edges during screwing of the implant is reduced, since the edges are facing inwardly (in the direction of the axis of the flute), rather than in the tangential direction of travel during rotation.

Other commercially available implants, such as Alpha Bio-Tec's Spiral^{™}, use a slightly spiral flute, but the spiral is extremely steep and lies at a very small angle with the axis of the implant, whereby there is no cutting edge instead, it serves to guide the implant during screwing.

Traditionally, even with self-tapping implants, the implant site is pre-drilled with successively larger diameter dental drills before implantation, and the implant is screwed into a pre-drilled bore close to or of the same diameter as the implant 30 diameter. The gradual expansion of the diameter of the drill bore with several drills is important for several reasons. Firstly, the self-tapping properties of the threads of conventional dental drills are not good enough. Secondly, if a drill with a larger diameter is used at the start, more heat is generated due to the frictional forces, causing the bone tissue to overheat, which will lead to bone necrosis and subsequently to the inability of the dead surrounding bone tissue to osseointegrate with the implant. To avoid this, in harderjawbones, typically 4 to 8 drills are used to create the desired bore to match the diameter of the implant. This requires both a lot of tools (dental drills) and makes the implantation procedure cumbersome and lengthy, which is uncomfortable for both the dentist and the patient. In addition, the many successive drillings also impose a significant thermal load on the bone, as there is typically no time to wait for the bone to cool down between each drilling, leading to necrosis of the living bone tissue, which also inhibits osseointegration.

US 2015/0297321A1 provides a dental implant, having a body portion, a first thread portion, a head portion, a plurality of second thread portions and a plurality of trenches. The body portion of the dental implant defines a drilling axial direction in a longitudinal direction thereof. The trench of the dental implant is formed at a radial side of the head portion and the body portion, and passes through the cutting faces and the cumulative faces from the head portion to the first thread portion. US 2015/0297321A1 shares with the invention the concern for relieving pain and speed wound healing - paragraph [0011] and to reduce the drilling steps- paragraph [0012].

The inventor of the present invention recognized that the self-tapping property of the implant could be enhanced by creating a cutting edge with a large surface area instead of a flattened surface at the location where the flute meets the thread. The surface area of the cutting edge depends on the angle of inclination of the flute, i.e. the angle between the flute and the implant axis, and the depth of the flute. The inventor of the present invention recognized that in order to obtain a suitable cutting edge, a minimum inclination angle of 45 degrees is required (wherein the angle is measured from the direction of the neck portion of the implant).

The inventor of the present invention also recognized that as the depth of the flute is increased, the diameter of the flute must be increased as well so that the flute widens continuously outwardly (i.e. away from the central axis of the implant) and the flute's cross-section should not have a bottle neck or lion's claw-shaped outer portion, as this reduces the cutting edge and worsens the self-tapping property rather than improving it. In addition, it is difficult to create a bottle neck profile from a manufacturing point of view.

US 2015/0297321A1 has a first disadvantage that it does not provide enhanced cutting edge with the large surface instead of a flattened surface, because the third objective of US 2015/0297321A1 see paragraph [0013] departs from the findings of the invention, because US 2015/0297321A1 does not aim to enhance the cutting edge of the self-tapping device, as the invention does, but rather to better guide bone scraps to approach the defeat portion which lacks of bone, so as to reduce the requirement for filing the bone graft materials.

The inventor of the present invention also recognized that it is sufficient to pre-cut a thread corresponding to the diameter of the implant in the harder cortical bone tissue of the jaw bone, and to create a smaller diameter pre-drilled bore in the underlying softer spongiosa bone tissue in case an implant with an enhanced self-cutting flute according to the invention is to be screwed therein. By making a narrower bore in the spongiosa bone tissue, the thermal stress on the bone tissue and thus the risk of necrosis of the bone can be reduced. The inventor has recognized that it is preferred to form a thread and self-tapping flute in only a proximal portion of a dental drill bit corresponding to a thread and self-tapping flute in the proximal threaded part of the dental implant according to the invention, since this is sufficient to allow a thread to be cut for the implant in the harder cortical bone tissue of the bone prior to implantation of the implant according to the invention.

US 2015/0297321A1 has a second disadvantage that it does not provide for optimization of the self-tapping within the meaning explained in the precedent paragraph, said optimization referring to how the self-tapping device must be adapted for both the harder cortical bone tissue and the underlying softer spongiosa bone tissue.

Based on the above findings, the objective of the invention is to provide a dental self-tapping device that is free from the disadvantages of the prior art solutions. The objective of the invention is in particular a dental self-tapping device that is optimized for self-tapping.

According to the invention, the above objectives were achieved by a dental self-tapping device comprising a body having a longitudinal axis t, the body having a proximal neck portion N, a proximal-central straight portion S of substantially constant diameter and a distal conical portion C of decreasing diameter, the body comprising a core and a thread provided thereon, a flute is formed in the thread, which flute runs spirally around the core and an axis of the flute is at an angle with the longitudinal axis. The angle measured from a proximal end of the body is 45 to 70 degrees, preferably 50 to 60 degrees, and the diameter of the flute in at least a portion of the body is 25 to 35%, preferably 27 to 33%, of the diameter of the body.

Since the flute spirals around the core, the axis of the flute also runs in a spiral shape and varies from point to point. The angle between the tangent of the axis and the longitudinal axis of the body is measured by shifting the tangent or the longitudinal axis of the body parallel to itself so that the tangent and the longitudinal axis intersect.

The shape of the cross-section of the flute perpendicular to the axis of the flute is preferably a circular arc having a centre angle of maximum 180 degrees. This means that the width of the flute increases monotonically from the direction of the core outwards and does not have a glass neck profile, thus maximising the efficiency of the cutting edge during the driving of the dental self-tapping device.

The flute is preferably formed with a spherical rotary burr.

The dental self-tapping device preferably comprises an even number of flutes - preferably two or four flutes - spaced evenly around the outer surface of the body.

The angle of the axis of the flute with the longitudinal axis is constant or varying along the longitudinal axis.

The dental self-tapping device can be a dental implant or a dental bone tapping drill bit.

In case of a dental implant, the outer diameter of the threads on at least the proximal half, preferably on at least the proximal two-thirds of the threaded part of the body is constant, and at least the distal third of the threaded part of the body tapers conically towards the distal end of the dental implant 10.

If the dental self-tapping device is a dental bone tapping drill bit, it comprises a wider diameter proximal portion 130 having a first diameter and a narrower diameter distal portion 140 having a second diameter smaller than the first diameter, wherein the thread and spirally running flute are formed on the wider diameter proximal portion 130.

The wider diameter proximal portion 130 of the dental bone tapping drill bit preferably has a length of 3-5 mm, more preferably 3-4 mm, and a diameter of 3.8-4.6 mm.

The narrower diameter distal portion 140 preferably has a length of 4 to 9 mm, a diameter of less than 2.5 mm, preferably less than 2.2 mm, more preferably not more than 2 mm.

The invention also relates to a set of dental self-tapping devices, according to Claim 12.

Preferred embodiments of the invention are defined in the dependent claims.

Further details of the invention are described by way of exemplary embodiments with reference to the drawings, wherein:
Figure 1a is a side view of a first embodiment of a dental implant according to the invention;
Figure 1b is a perspective top view of the implant according to Figure 1a;
Figure 1c is a perspective bottom view of the implant according to Figure 1a;
Figure 1d is a bottom view of the implant according to Figure 1a;
Figure 2a is a side view of a second embodiment of a dental implant according to the invention;
Figure 2b is a perspective top view of the implant according to Figure 2a;
Figure 3a is a side view of a third embodiment of a dental implant according to the invention;
Figure 3b is a perspective top view of the implant according to Figure 3a;

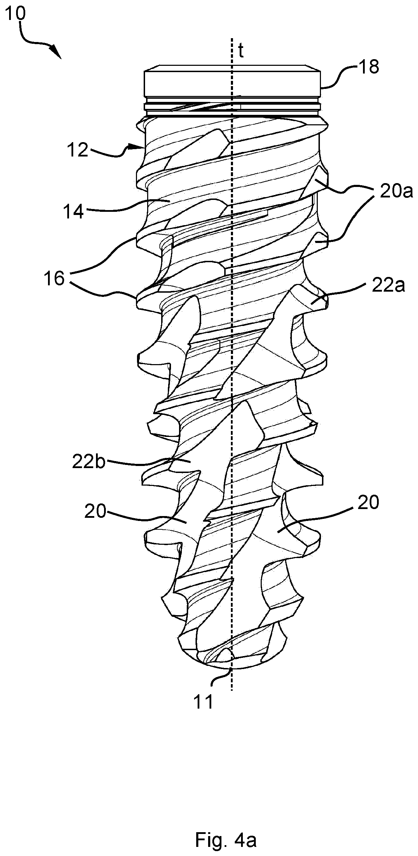

Figure 4a is a side view of a further embodiment of a dental implant according to the invention;

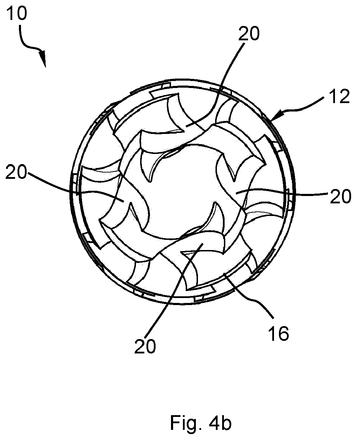

Figure 4b is a bottom view of the implant according to Figure 4a;
Figure 5a is a side view of a template body for manufacturing the dental implant according to the invention;
Figure 5b is a cross-sectional view of the template body according to Figure 5a;
Figure 5c is a bottom view of the template body according to Figure 5a;
Figure 6 is a perspective view of a dental bone tapping drill bit according to the invention;
Figure 7 is a series of cross-sectional images illustrating the stages of the implantation protocol of a dental implant according to the invention.

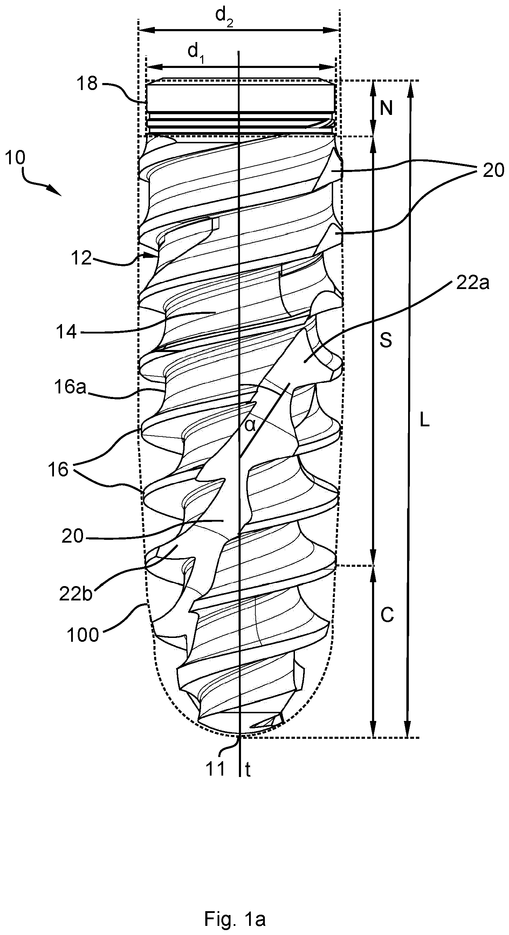

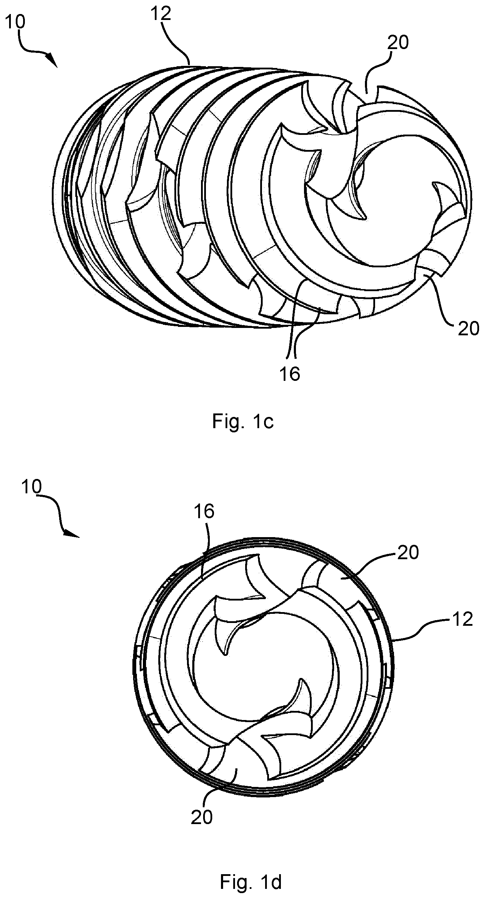

Figures 1a - 1f show different views of an embodiment of a dental self-tapping device according to the invention, which is a dental implant 10 in this example. The dental implant 10 has a body 12 with a longitudinal axis t. The body 12 comprises a core 14 and thread 16 formed thereon, as well as a proximal neck portion 18, N without a bone-cutting thread. In the context of the present invention thread 16 means one or more threads, for example, single thread 16 or double threads 16 or triple threads 16 can run around the core 14 on the body 12. The design of the threads 16 can be any design, for example so-called buttress thread design.

At least one flute 20 forming an angle α with the longitudinal axis t and running spirally around the body 12 is formed in the thread 16, preferably with a spherical rotary burr 500. The implant 10 preferably contains an even number of flutes 20 - preferably two or four flutes 20 - which are evenly spaced from each other around the outer surface of the body 12. This eliminates the tendency for the implant 10 to tilt during screwing, which would result in the implant being placed at an angle to the desired position.

Preferably, the implant 10 is formed from a template body illustrated with a dashed line, the template body having a proximal neck portion 18, N, a proximal-central straight portion S of substantially constant diameter and a distal conical portion C of decreasing diameter. The thread 16 is cut into this template body 12', a flute groove 16a of which delimits the core 14. An embodiment is also conceivable in which the entire part apart from the neck portion 18, N of the template body 12' is conical, but the advantage of the proximal-central straight portion S is that after the implantation of the implant 10, the straight portion S does not exert a tensioning, wedging effect on the surrounding bone tissue, while the distal conical portion C facilitates the driving of the implant into the bone tissue. In the case of the finished implant 10, it is particularly advantageous if the outer diameter of the threads 16 is constant on at least the proximal half of the threaded part of the body 12 (this is the largest diameter d₂) and at least the distal third of the body 12 tapers conically towards a distal end 11 of the implant.

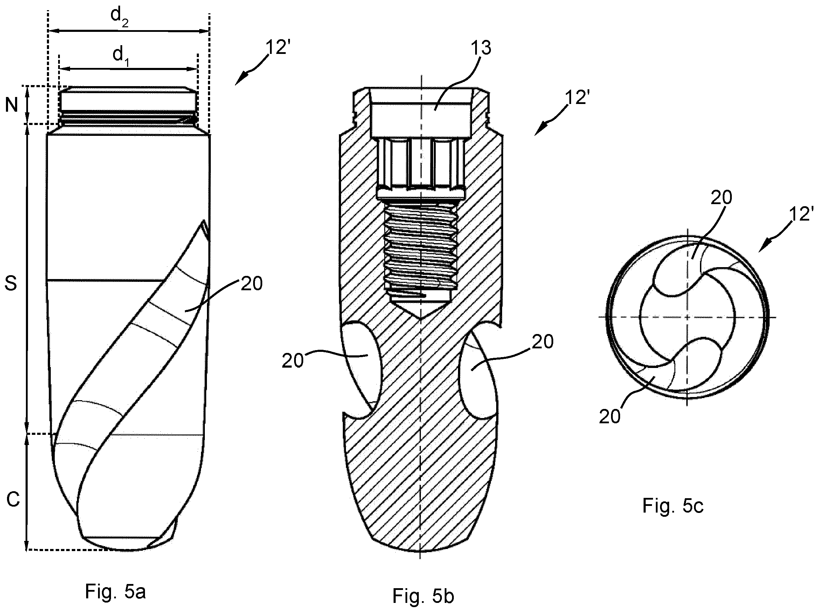

The flute 20 can be formed on the threaded body or on the template body 12' before cutting the threads 16, as illustrated in Figures 5a - 5c. In Figure 5b an internal threaded channel 13a can be observed in the cross-section of the template body 12' which serves for connecting a healing screw and later an abutment.

The diameter d₁ of the neck portion 18, N is chosen to accommodate a standard size internal threaded channel 13. For example, the diameter of the neck portion 18, N is approximately 3.5 mm. Consequently, the diameter d₁ of the neck portion 18, N of the finished implant 10 is about 3.5 mm, which is also the maximum diameter of the core 14.

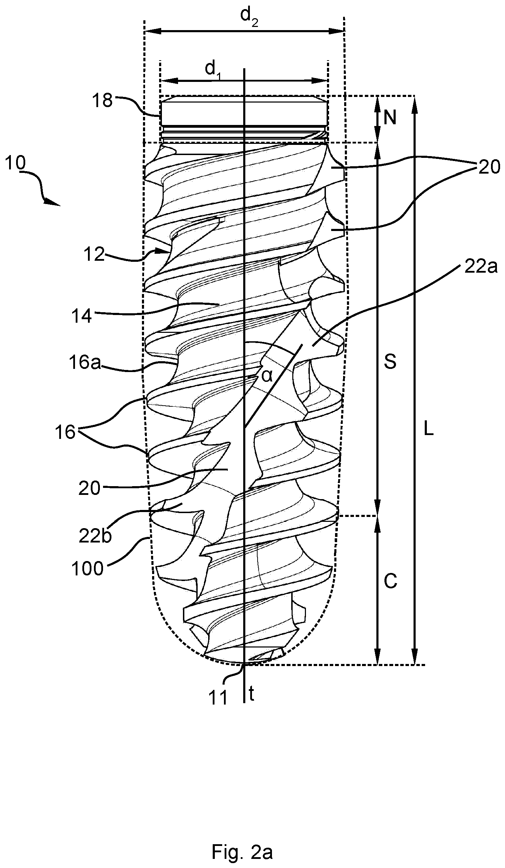

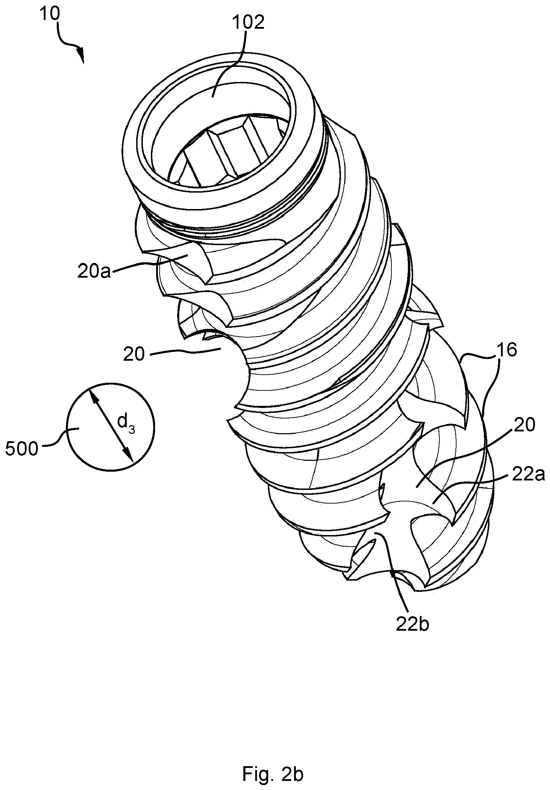

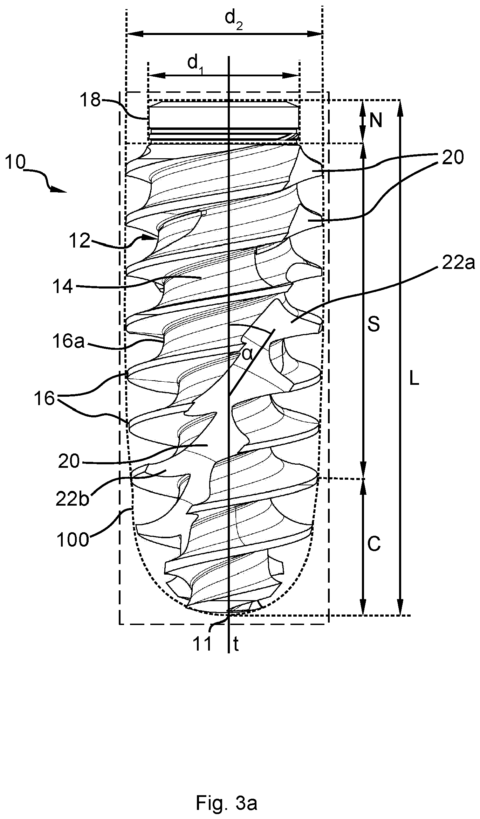

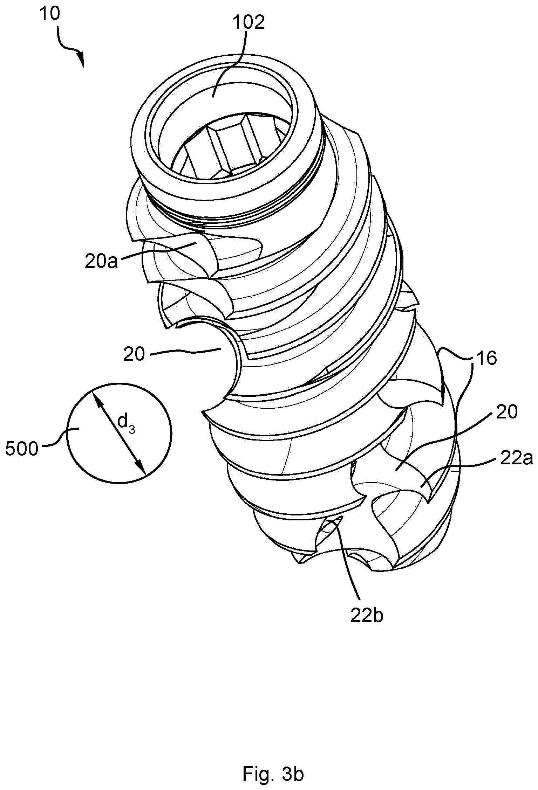

The maximum d₂ diameter of the portion of the template body 12' apart from the neck portion 18, N (in this case the diameter of the straight portion S) is the maximum diameter d₂ of the body 12 of the implant 10, which corresponds to the maximum diameter of an enveloping surface of the thread 16. This is chosen according to the implantation site. Implants are usually manufactured with a range of diameters d₂. The inventor of the present invention has found that the various needs can be well covered by selecting the diameter d₂ of each of the at least one dental implant 10 is selected from a respective list of diameters, each list comprising at least three diameters d₂ for each of the at least one dental implants 10 that forms an increasing series with a step interval of at least 0.2 mm, preferably with a step interval of 0.3 to 0.5 mm, more preferably with a step interval of 0.4 mm, and wherein the cores 14 of the dental implants are substantially identical for all the selected diameters d2 from the list. For example, at least three dental implants 10 with the maximum external diameters d₂ of the bodies 12 form an increasing series with a step interval of at least 0.2 mm, preferably with a step interval of 0.3 to 0.5 mm, more preferably with a step interval of 0.4 mm, and all the afore-mentioned dental implants 10 having substantially the same core 14. For example, the embodiment in Figure 1a - 1f where d₂ = 3.8 mm, the embodiment in Figure 2a - 2b where d₂ = 4.2 mm and the embodiment in Figure 3a- 3b where d₂ = 4.6 mm form such a series, where the diameter d₁ of the neck portion18, N in all three embodiments is 3.5 mm.

The length L of the implant also depends on the implantation site, the figures show medium length implant 10 shown having a length L of 12 mm, but the implant 10 according to the invention can also be produced with a different length L if required.

Due to the spiral shape of the flute 20, a cutting edge 22a and 22b is created on each side of the flute 20 on the thread 16. Thus, when the implant 10 is rotated clockwise and counter clockwise, one of the cutting edges 22a, 22b is cutting. The cutting edge 22a is performing cutting in case of clockwise rotation, which is therefore called the forward cutting wing, while counter clockwise rotation causes the cutting edge 22b to cut, which is therefore called the reverse cutting wing.

The size and thus the efficiency of the cutting edges 22a, 22b depends on the angle α and the diameter of the flute 20.

The angle α formed by the flute 20 and the longitudinal axis t of the implant 10, measured from the proximal end of the body 12 (i.e. from the end at the neck portion 18, N), is, between 45 to 70 degrees, for example 45 to 60 degrees, or 50 to 60 degrees. The angle α along the longitudinal axis t may be constant or varying. The angle α may be measured at any distance from the distal end 11 of the implant 10. The direction of the axis of the flute 20 varies from point to point as a function of the distance, since the flute 20 spirals up the body 12 of the implant 10. Consequently, the angle α shown in Figure 1a is illustrative, on the one hand, the longitudinal axis t and the axis of the flute 20 define skew lines which can be made to intersect by parallel translation, and on the other hand, the axis of the flute 20 is at a different angle to the plane of the sheet of Figure 1a from point to point along the spiral line of the flute 20 around the core 14. In Figure 1a, one leg of the angle α (shown vertically) is the longitudinal axis t of the body 12, and the other leg is the tangent line of the axis of the flute 20 in the projection corresponding to the side view of Figure 1a, since the tangent line also forms an angle with the plane of Figure 1a.

The diameter of the flute 20 in at least a portion of the body 12, preferably in the apical (distal) two-thirds portion, is 25-35%, preferably 27-33%, of the diameter d₂ of the body 12. In the proximal portion close to the neck portion 18, N the thread grove 16a of the thread 16 is less deep in order to allow sufficient wall thickness in the remaining core 14 despite the proximal threaded channel 13 provided for the attachment of the abutment. For this reason, the flute 20 in this portion is not a continuous trough-shaped groove, but is formed by flute portions 20a at the outer periphery of the thread 16, referred to as micro flutes. In the central portion following the proximal portion there is no such obstacle, therefore here the diameter of the flute 20 is preferably 25-35% of the diameter d₂ of the body 12, preferably 27-33%.

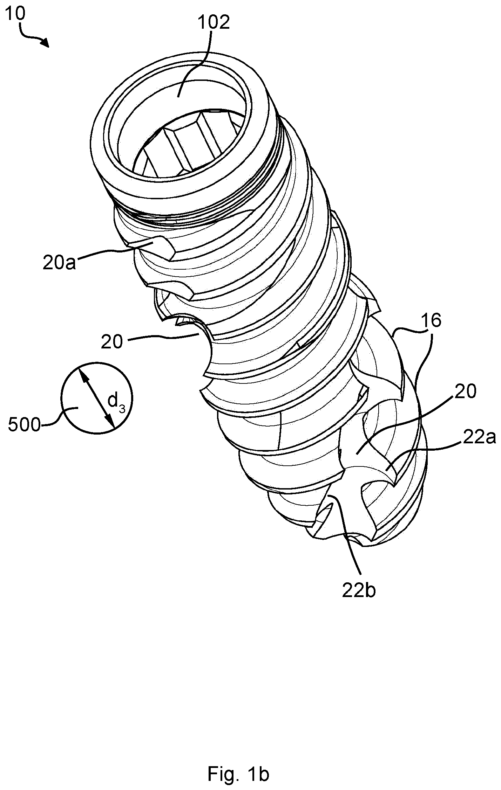

In order to provide the maximum cutting edge 22a, 22b area, the width of the flute 20 (i.e. the dimension of the flute 20 perpendicular to its axis) increases monotonically outwardly from the direction of the core 14, in other words, the cross-section of the flute 20 perpendicular to the axis of the flute 20 has a circular arc shape (see in particular Figures 1b and 1c), the central angle of the circular arc being at most 180 degrees.

This means that in the case of the flute 20 of the invention, there is no bottle neck in the flute 20 profile.

The flute 20 of the implant 10 is preferably formed with a spherical rotary burr, which is illustrated by the ball marked with the reference number 500 in Figures 1b, 2b and 3b. It can be seen that in the implant 10 having larger diameter d₂ and comprising the thread 16 of greater depth, the flute 20 is fraised with a spherical rotary burr 500 having a larger diameter d₃, since the diameter d₃ of the spherical rotary burr 200 gives the diameter (maximum width) of the flute 20. Preferably, the diameter (maximum width) of the flute 20 is the same as the diameter d₃ of the 20 spherical rotary burr 500 with which the flute 20 is formed. For this, when milling the flute 20, the spherical rotary burr 200 is pressed into the thread 16 at a depth equal to its radius (that is, half of the diameter d₃). This can also be determined afterwards, from the examination of the flute 20. The radius of the spherical rotary burr 500 (which is half the diameter d₃) is ideally chosen so that it is not greater than the thread depth of the thread 16, and when milling the flute 20, the spherical rotary burr 500 is preferably pressed into the thread 16 at a depth equal to its radius at most, so that the flute 20 is made in the thread 16 and not in the core 14. The inner part of the flute 20 is not expanded by the spherical rotary burr 500, i.e. the cross-section of the flute 20 perpendicular to the axis of the flute 20 is in the shape of a circular arc corresponding to the circumference of the spherical rotary burr 500, the centre angle of which circle is at most 180 degrees due to the fact that the spherical rotary burr 500 is pressed in at a depth corresponding to its radius at most into the thread 16, thus no glass neck is formed at the outer edge of the thread 16, instead the width of the flute 20 increases monotonically outwardly in a direction substantially perpendicular to the axis of the flute 20, whereby a maximum cutting edge 22a, 22b area can be provided.

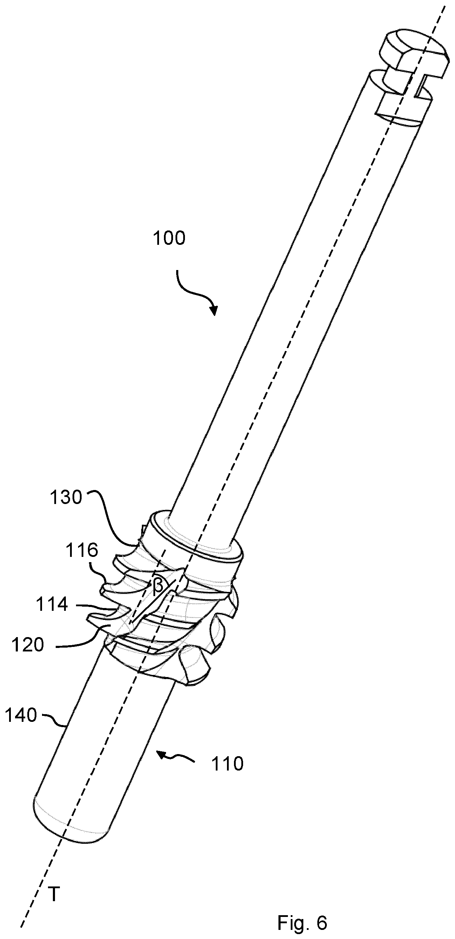

Figure 6 illustrates another embodiment of the dental self-tapping device according to the invention, which is a dental bone tap drill 100. The dental bone tap drill 100 has a body 110 with a wider diameter proximal portion 130 having a core 114 and a thread 116 formed thereon, and a narrower diameter distal portion 140 connected to the wider diameter proximal portion 130. The thread 116 of the wider diameter proximal portion 130 is at an angle β with the longitudinal axis T of the body 110, and includes at least one, preferably two or four flutes 120 spiralling around the body 110, such as described in relation to the preceding embodiments.

The length of the wider diameter proximal portion 130 of the dental bone tap drill 100 is preferably 3-5 mm, more preferably 3-4 mm, and its diameter is preferably 3.8-4.6 mm. Preferably, the external design of the wider diameter proximal portion 130 of the tap drill 100 is substantially identical to the external design of the wider diameter proximal portion 130, preferably the proximal third, of an implant 10 according to the invention, so that the tap drill 100 can be used to tap a thread into the jaw bone prior to implantation for the wider diameter proximal portion 130 of the corresponding implant 10.

The narrower diameter distal portion 140 is preferably a guide shaft, the length of the guide shaft is selected such that the combined length of the wider diameter proximal portion 130 and the narrower diameter distal portion 140 is substantially equal to the length L of the implant 10 for which the tap drill 100 is used to cut the threads prior to implantation. Accordingly, the length of the narrower diameter distal portion 140 is typically between 4 mm and 9 mm, depending on the length L of the associated implant 10. Preferably the diameter of the narrower diameter distal portion 140 is less than 2.5 mm, more preferably less than 2.2 mm, more preferably up to 2 mm, for example 2 mm, so that it can be easily inserted into a bore predrilled by a conventional pilot drill.

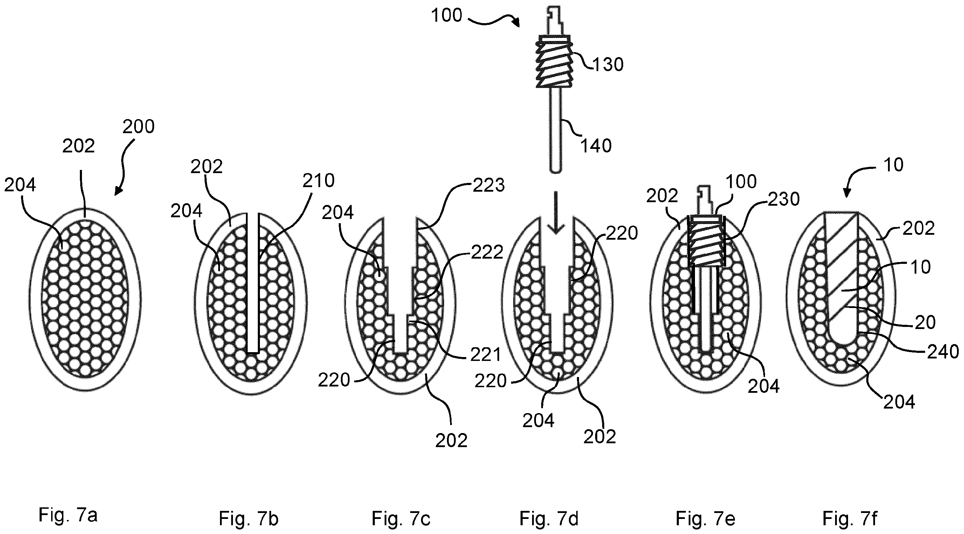

The process for implanting the implant 10 according to the invention is illustrated in Figures 7a - 7f. Figure 7a shows a cross section of the patient's lower or upper jawbone 200. The outer thicker cortical tissue 202 is typically 0.5 - 3 mm thick, in extreme cases up to 4 mm. It is denser and harder in texture compared to the underlying softer spongiosa tissue 204.

For the implant 10 of the invention, a conventional pilot drill with a diameter of about 2 mm can first be used to create a primary bore 210 having a depth equal to the length L of the implant 10 (Figure 7b). In the next step, a wider secondary bore 220 (Figure 7c) is formed, preferably with a three-stage step drill bit, at the location of the primary bore 210. The three-stage step drill bit has a distal part 221 having the smallest diameter, preferably corresponding to the diameter of the pilot drill, which is typically 2 - 2.2 mm (e.g. about 2 mm in diameter), its middle part 222 has a diameter of a few tenths of a mm larger (preferably 0.2 - 0.4 mm larger in diameter, e.g. about 2.2 mm in diameter), and its proximal part 223 has a further few tenths of a mm larger diameter (being preferably 0.2 to 0.4 mm larger in diameter, for example having a diameter of about 2.5 mm).

If the outer thicker cortical tissue 202 of the patient's jawbone 200 is relatively thin (e.g., between 0.5 and 2 mm), the implant 10 according to the invention comprising the thread 16 with the flute 20 can be screwed into the secondary bore 220 without the use of an additional pre-drill due to its increased self-tapping ability.

In case of harder bone, i.e. outer thicker cortical tissue 202, it is preferable to use the tap drill 100 of the invention to drill a tertiary bore 230 (Figure 7d - 7e). The narrower diameter distal portion 140 of the tap drill 100 is a guide shaft, the diameter of which preferably does not exceed the diameter of the distal part 221 of the secondary bore 220 formed by the step drill bit, so that when the drill bit is inserted, the distal end 140 does not cut the bone, but only serves to position the wider diameter proximal portion 130. In Figure 7e, for illustrative purposes, the wider diameter proximal portion 130 of the tap drill 100 is shown as having a smaller diameter than the proximal portion of the tertiary bore 230 in order to allow the wider diameter proximal portion 130 of the tap drill 100 to be visible within the tertiary bore 230, but in reality, the proximal portion of the tertiary bore 230 is formed by the wider diameter proximal portion 130 of the tap drill 100. The tap drill 100 cuts a thread (and creates a diameter) in the outer thicker cortical tissue 202 corresponding to the wider diameter proximal portion 130 of the implant 10 to be inserted, so that when the implant 10 is inserted, the wider diameter proximal portion 130 of the implant 10 can be screwed into the tertiary bore 230 without substantial cutting of the outer thicker cortical tissue 202. The implant 10 only taps significantly into the softer spongiosa tissue 204 while creating a fourth bore 240 corresponding to the external size of the implant 10. The inventor of the present invention has recognized that it does not cause any problem to significantly widen the diameter of the fourth bore 240 in the softer spongiosa tissue 204, as the softer spongiosa tissue 204 is easier to cut, and the resulting bone chips can be partially removed from the inside of the wider diameter fourth bore 240 by compressing the surrounding softer spongiosa tissue 204, and can be partially compressed in the flutes 20 of the implant 10. Thus, even with the outer thicker cortical tissue 202 (up to 3-4 mm thick), the conventional pilot drill, the three-stage step drill bit 300 described above and the tap drill 100 of the invention are sufficient for inserting the implant 10 when using the dental implant 10 and the dental tap drill 100 according to the invention, as opposed to the state-of-the-art implantation protocol, where more pre-drills of up to 6-8 different diameters are used after the pilot drill to create increasingly larger diameter bores. Multiple drilling puts a heavy thermal load on the bone tissue, which can lead to bone necrosis and consequently reduced osseointegration.

It will be apparent to those skilled in the art that various modifications are conceivable to the above disclosed embodiments without departing from the scope of protection determined by the appended claims.

### Reference list

- **10, 100**: dental self-tapping device
- **10**: dental implant
**11** distal end
- **L**: length of the implant
- **12**: body
**t** longitudinal axis
**d₂** diameter, alternatively called, body diameter
**13** internal threaded channel
**14** core
**18, N** neck portion
**d₁** diameter of the neck portion N
**S** proximal-central straight portion
**C** distal conical portion C
**16** thread
**16a** flute groove
**20** flute
**20a** flute portions
**22a, 22b** cutting edges
α angle
- **12'**: template body 12'

- **100**: dental bone tap drill
- **110**: body
**130** a wider diameter proximal portion
**114** core 114
**116** thread 116
**140** a narrower diameter distal portion
**120** flutes
**β** angle
- **200**: patient's lower or upper jawbone
**202** outer, thicker cortical tissue
**204** softer, spongiosa tissue
**210** primary bore
**220** secondary bore
**230** tertiary bore
**240** fourth bore
- **500**: spherical rotary burr
**d₃** diameter of the spherical rotary burr

## Claims

1. A dental self-tapping device (10,100) comprising a body (12) having a longitudinal axis (t,T), the body (12, 110) having a proximal neck portion N, a proximal-central straight portion S of substantially constant diameter and a distal conical portion C of decreasing diameter, the body (12, 110) comprising a core (14, 114) and a thread (16) provided thereon, a flute (20, 120) having a circular arc shape and the central angle of the circular arc being at most 180 degrees, the flute (20,120) formed in the thread (16), which flute (20, 120) runs spirally around the core (14, 114) and an axis of the flute (20, 120) is at an angle (α, β) with the longitudinal axis (t,T), **characterized in that** the angle (α, β) measured from a proximal end of the body (12, 110) is 45 to 70 degrees, preferably 50 to 60 degrees, and the diameter of the flute (20, 120) in at least a portion of the body (12, 110) is 25 to 35%, preferably 27 to 33%, of the diameter (d₂) of the body (12, 110).

2. The dental self-tapping device (10,100) according to claim 1, **characterized in that** the flute (20, 120) has a cross-section perpendicular to the axis of the flute (20, 120) in the shape of a circular arc, a central angle of which is maximum 180 degrees.

3. The dental self-tapping device (10,100) according to claim 1 or 2, **characterized in that** it contains an even number of flutes (20, 120) - preferably two or four flutes (20, 120) - which are evenly spaced from each other around an external surface of the body (12, 110).

4. The dental self-tapping device (10,100) according to any one of claims 1 to 3, **characterized in that** the flute (20, 120) is formed with a spherical rotary burr (500).

5. The dental self-tapping device (10,100) according to any one of claims 1 to 4, **characterized in that** the angle (α, β) of the axis of the flute (20, 120) with the longitudinal axis (t,T) is constant or varying along the longitudinal axis (t,T).

6. The dental self-tapping device (10,100) according to any one of claims 1 to 5, **characterized in that** the flute diameter is 25-35% of the body diameter (d₂), preferably 27-33% of the body diameter (d₂), at least on a distal third of a threaded part of the body (12, 110).

7. The dental self-tapping device (10,100) according to any one of claims 1 to 6, **characterized in that** the dental self-tapping device (10,100) is a dental implant (10).

8. The dental self-tapping device (10,100) according to claim 7, **characterized in that** the outer diameter of the threads (16) on at least the proximal half of the threaded part of the body (12) is constant, and at least the distal third of the threaded part of the body (12) tapers conically towards the distal end (11) of the dental implant (10).

9. The dental self-tapping device (10,100) according to any one of claims 1 to 6, **characterized in that** the dental self-tapping device (10, 100) is a dental bone tapping drill bit (100) comprising a proximal portion (130) having a first diameter and a distal portion (140) having a second diameter smaller than the first diameter, wherein the thread (16) and the spirally running flute (120) are formed on the wider diameter proximal portion (130).

10. The dental self-tapping device (10,100) according to claim 9, **characterized in that** the wider diameter proximal portion (130) of the dental tapping drill bit (100) has a length of 3-5 mm, preferably 3-4 mm, and a diameter (d₂) of 3.8-4.6 mm.

11. The dental self-tapping device (10,100) according to claim 9 or 10, **characterized in that** the narrower diameter distal portion (140) has a length of 4 to 9 mm, a diameter (d₂) of less than 2.5 mm, preferably less than 2.2 mm, more preferably maximum 2 mm.

12. A set of dental self-tapping devices (10,100) comprising at least two dental self- tapping devices (10,100) according to any one of claims 1 to 11.

13. The set of dental self-tapping devices (10,100) according to claim 12, **characterized in that** the set comprises at least three dental implants (10), and **in that** the diameter d₂ of each of the at least three dental implants (10) is selected from a list of diameters that forms an increasing series with a step interval of at least 0.2 mm, preferably with a step interval of 0.3 to 0.5 mm, more preferably with a step interval of 0.4 mm, and wherein the cores (14) of the dental implants are substantially identical for all the selected diameters (d₂) from the list.

14. The set of dental self-tapping devices (10,100) according to claim 13, **characterized in that** the set comprises for each dental implant (10) a dental bone tapping drill bit (100), and **in that** in order for each dental bone tapping drill bit (100) be suitable for each respective dental implant (10), a proximal portion of an external surface of the dental tapping drill bit (100) is identical to a proximal portion of an external surface of the respective dental implant.

## Patentansprüche

1. Dentale selbst-gewindeschneidende Vorrichtung (10, 100), die einen Körper (12) umfasst, der eine Längsachse (t, T) aufweist, wobei der Körper (12, 110) einen proximalen Halsabschnitt N, einen proximal-mittigen geraden Abschnitt S mit im Wesentlichen konstantem Durchmesser und einen distalen konischen Abschnitt C mit abnehmendem Durchmesser aufweist, wobei der Körper (12, 110) einen Kern (14, 114) und ein Gewinde (16), das auf demselben bereitgestellt wird, eine Rille (20, 120), die eine Kreisbogenform aufweist, und wobei der Mittelpunktwinkel des Kreisbogens höchstens 180 Grad beträgt, umfasst, wobei die Rille (20, 120) in dem Gewinde (16) geformt ist, wobei die Rille (20, 120) spiralförmig um den Kern (14, 114) verläuft und eine Achse der Rille (20, 120) in einem Winkel (α, β) mit der Längsachse (t, T) liegt, **dadurch gekennzeichnet, dass** der Winkel (α, β), gemessen von einem proximalen Ende des Körpers (12, 110), 45 bis 70 Grad, vorzugsweise 50 bis 60 Grad, beträgt und der Durchmesser der Rille (20, 120) in mindestens einem Abschnitt des Körpers (12, 110) 25 bis 35 %, vorzugsweise 27 bis 33 %, des Durchmessers (d₂) des Körpers (12, 110) beträgt.

2. Dentale selbst-gewindeschneidende Vorrichtung (10, 100) nach Anspruch 1, **dadurch gekennzeichnet, dass** die Rille (20, 120) einen Querschnitt, senkrecht zu der Achse der Rille (20, 120), in der Form eines Kreisbogens aufweist, wobei ein Mittelpunktwinkel desselben maximal 180 Grad beträgt.

3. Dentale selbst-gewindeschneidende Vorrichtung (10, 100) nach Anspruch 1 oder 2, **dadurch gekennzeichnet, dass** sie eine gerade Anzahl von Rillen (20, 120) - vorzugsweise zwei oder vier Rillen (20, 120) - umfasst, die um eine Außenfläche des Körpers (12, 110) herum gleichmäßig voneinander beabstandet sind.

4. Dentale selbst-gewindeschneidende Vorrichtung (10, 100) nach einem der Ansprüche 1 bis 3, **dadurch gekennzeichnet, dass** die Rille (20, 120) mit einem kugelförmigen rotierenden Grat (500) geformt ist.

5. Dentale selbst-gewindeschneidende Vorrichtung (10, 100) nach einem der Ansprüche 1 bis 4, **dadurch gekennzeichnet, dass** der Winkel (α, β) der Achse der Rille (20, 120) mit der Längsachse (t, T) konstant oder entlang der Längsachse (t, T) veränderlich ist.

6. Dentale selbst-gewindeschneidende Vorrichtung (10, 100) nach einem der Ansprüche 1 bis 5, **dadurch gekennzeichnet, dass** der Rillendurchmesser, mindestens auf einem distalen Drittel eines mit Gewinde versehenen Teils des Körpers (12, 110), 25 bis 35 % des Körperdurchmessers (d₂), vorzugsweise 27 bis 33 % des Körperdurchmessers (d₂), beträgt.

7. Dentale selbst-gewindeschneidende Vorrichtung (10, 100) nach einem der Ansprüche 1 bis 6, **dadurch gekennzeichnet, dass** die dentale selbst-gewindeschneidende Vorrichtung (10, 100) ein Dentalimplantat (10) ist.

8. Dentale selbst-gewindeschneidende Vorrichtung (10, 100) nach Anspruch 7, **dadurch gekennzeichnet, dass** der Außendurchmesser der Gewindegänge (16) auf mindestens der proximalen Hälfte des mit Gewinde versehenen Teils des Körpers (12) konstant ist und sich mindestens das distale Drittel des mit Gewinde versehenen Teils des Körpers (12) zu dem distalen Ende (11) des Dentalimplantats (10) hin konisch verjüngt.

9. Dentale selbst-gewindeschneidende Vorrichtung (10, 100) nach einem der Ansprüche 1 bis 6, **dadurch gekennzeichnet, dass** die dentale selbst-gewindeschneidende Vorrichtung (10, 100) eine dentale gewindeschneidende Knochenbohrspitze (100) ist, die einen proximalen Abschnitt (130), der einen ersten Durchmesser aufweist, und einen distalen Abschnitt (140), der einen zweiten Durchmesser, kleiner als der erste Durchmesser, aufweist, umfasst, wobei das Gewinde (16) und die spiralförmig verlaufende Rille (120) auf dem proximalen Abschnitt (130) mit breiterem Durchmesser geformt sind.

10. Dentale selbst-gewindeschneidende Vorrichtung (10, 100) nach Anspruch 9, **dadurch gekennzeichnet, dass** der proximale Abschnitt (130) mit breiterem Durchmesser der dentalen gewindeschneidenden Knochenbohrspitze (100) eine Länge von 3 bis 5 mm, vorzugsweise 3 bis 4 mm, und einen Durchmesser (d₂) von 3,8 bis 4,6 mm aufweist.

11. Dentale selbst-gewindeschneidende Vorrichtung (10, 100) nach Anspruch 9 oder 10, **dadurch gekennzeichnet, dass** der distale Abschnitt (140) mit schmalerem Durchmesser eine Länge von 4 bis 9 mm, einen Durchmesser (d₂) von weniger als 2,5 mm, vorzugsweise weniger als 2,2 mm, am bevorzugtesten maximal 2 mm, aufweist.

12. Satz von dentalen selbst-gewindeschneidenden Vorrichtungen (10, 100), der mindestens zwei dentale selbst-gewindeschneidende Vorrichtungen (10, 100) nach einem der Ansprüche 1 bis 11 umfasst.

13. Satz von dentalen selbst-gewindeschneidenden Vorrichtungen (10, 100) nach Anspruch 12, **dadurch gekennzeichnet, dass** der Satz mindestens drei Dentalimplantate (10) umfasst, und dadurch, dass der Durchmesser d₂ jedes der mindestens drei Dentalimplantate (10) von einer Liste von Durchmessern ausgewählt ist, die eine zunehmende Reihe mit einem Schrittabstand von mindestens 0,2 mm, vorzugsweise mit einem Schrittabstand von 0,3 bis 0,5 mm, bevorzugter mit einem Schrittabstand von 0,4 mm, bildet, und wobei die Kerne (14) der Dentalimplantate für alle der ausgewählten Durchmesser (d₂) von der Liste im Wesentlichen identisch sind.

14. Satz von dentalen selbst-gewindeschneidenden Vorrichtungen (10, 100) nach Anspruch 13, **dadurch gekennzeichnet, dass** der Satz für jedes Dentalimplantat (10) eine dentale gewindeschneidende Knochenbohrspitze (100) umfasst, und dadurch, dass, damit jede gewindeschneidende Knochenbohrspitze (100) für jedes jeweilige Dentalimplantat (10) geeignet ist, ein proximaler Abschnitt einer Außenfläche der gewindeschneidenden Knochenbohrspitzen (100) identisch mit einem proximalen Abschnitt einer Außenfläche des jeweiligen Dentalimplantats ist.

## Revendications

1. Dispositif dentaire auto-taraudeur (10, 100), comprenant un corps (12) comportant un axe longitudinal (t, T), le corps (12, 110) comportant une partie de col proximale N, une partie proximale-centrale droite S ayant un diamètre sensiblement constant et une partie distale conique C ayant un diamètre décroissant, le corps (12, 110) comprenant un noyau (14, 114) et un filetage (16) qui y est disposé, une goujure (20, 120) ayant une forme en arc circulaire, et l'angle central de l'arc circulaire correspondant au maximum à 180 degrés, la goujure (20, 120) est formée dans le filetage (16), ladite goujure (20, 120) s'étendant en spirale autour du noyau (14, 114), et un axe de la goujure (20, 120) forme un angle (α, β) par rapport à l'axe longitudinal (t, T), **caractérisé en ce que** l'angle (α, β) mesuré à partir d'une extrémité proximale du corps (12, 110) est compris entre 45 et 70 degrés, de préférence entre 50 et 60 degrés, et le diamètre de la goujure (20, 120) dans au moins une partie du corps (12, 110) représente 25 à 35 %, de préférence 27 à 33 %, du diamètre (d₂) du corps (12, 110).

2. Dispositif dentaire auto-taraudeur (10, 100) selon la revendication 1, **caractérisé en ce que** la goujure (20, 120) a une section transversale perpendiculaire à l'axe de la goujure (20, 120) dans la forme d'un arc circulaire, dont un angle central correspond au maximum à 180 degrés.

3. Dispositif dentaire auto-taraudeur (10, 100) selon les revendications 1 ou 2, **caractérisé en ce qu'**il contient un nombre pair de goujures (20, 120) - de préférence deux ou quatre goujures (20, 120) - qui sont espacées de manière égale les unes des autres autour d'une surface externe du corps (12, 110).

4. Dispositif dentaire auto-taraudeur (10, 100) selon l'une quelconque des revendications 1 à 3, **caractérisé en ce que** la goujure (20, 120) est formée par une fraise rotative sphérique (500).

5. Dispositif dentaire auto-taraudeur (10, 100) selon l'une quelconque des revendications 1 à 4, **caractérisé en ce que** l'angle (α, β) de l'axe de la goujure (20, 120) par rapport à l'axe longitudinal (t, T) est constant ou varie le long de l'axe longitudinal (t, T).

6. Dispositif dentaire auto-taraudeur (10, 100) selon l'une quelconque des revendications 1 à 5, **caractérisé en ce que** le diamètre de la goujure représente 25 à 35 % du diamètre du corps (d₂), de préférence 27 à 33 % du diamètre du corps (d₂), au moins sur un tiers distal d'une partie filetée du corps (12, 110).

7. Dispositif dentaire auto-taraudeur (10, 100) selon l'une quelconque des revendications 1 à 6, **caractérisé en ce que** le dispositif dentaire auto-taraudeur (10, 100) est un implant dentaire (10).

8. Dispositif dentaire auto-taraudeur (10, 100) selon la revendication 7, **caractérisé en ce que** le diamètre extérieur des filetages (16) sur au moins la moitié proximale de la partie filetée du corps (12) est constant, et au moins le tiers distal de la partie filetée du corps (12) est effilée de manière conique vers l'extrémité distale (11) de l'implant dentaire (10).

9. Dispositif dentaire auto-taraudeur (10, 100) selon l'une quelconque des revendications 1 à 6, **caractérisé en ce que** le dispositif dentaire auto-taraudeur (10, 100) est un foret de taraudage à os dentaire (100), comprenant une partie proximale (130) ayant un premier diamètre et une partie distale (140) ayant un deuxième diamètre inférieur au premier diamètre, dans lequel le filetage (16) et la goujure à extension en spirale (120) sont formés sur la partie proximale (130) à diamètre plus grand.

10. Dispositif dentaire auto-taraudeur (10, 100) selon la revendication 9, **caractérisé en ce que** la partie proximale (130) à diamètre plus grand du foret de taraudage à os dentaire (100) a une longueur comprise entre 3 et 5 mm, de préférence entre 3 et 4 mm, et un diamètre (d₂) compris entre 3,8 et 4,6 mm.

11. Dispositif dentaire auto-taraudeur (10, 100) selon les revendications 9 ou 10, **caractérisé en ce que** la partie distale (140) à diamètre plus étroit a une longueur comprise entre 4 et 9 mm, un diamètre (d₂) inférieur à 2,5 mm, de préférence inférieur à 2,2 mm, dans les cas plus préférés d'au maximum 2 mm.

12. Ensemble de dispositifs dentaires auto-taraudeurs (10, 100), comprenant au moins deux dispositifs dentaires auto-taraudeurs (10, 100) selon l'une quelconque des revendications 1 à 11.

13. Ensemble de dispositifs dentaires auto-taraudeurs (10, 100) selon la revendication 12, **caractérisée en ce que** l'ensemble comprend au moins trois implants dentaires (10), et **en ce que** le diamètre d₂ de chacun des au moins trois implants dentaires (10) est sélectionné à partir d'une liste de diamètres qui forme une série croissante avec un intervalle de pas d'au moins 0,2 mm, de préférence un intervalle de pas compris entre 0,3 et 0,5 mm, dans les cas plus préférés avec un intervalle de pas de 0,4 mm, et dans lequel les noyaux (14) des implants dentaires sont sensiblement identiques pour tous les diamètres sélectionnés (d₂) à partir de la liste.

14. Ensemble de dispositifs dentaires auto-taraudeurs (10, 100) selon la revendication 13, **caractérisé en ce que** l'ensemble comprend pour chaque implant dentaire (10) un foret de taraudage à os dentaire (100) et en ce, pour que chaque foret de taraudage à os dentaire (100) soit approprié pour chaque implant dentaire respectif (10), une partie proximale d'une surface externe des trépans de forage dentaire (100) est identique à une partie proximale d'une surface externe de l'implant dentaire respectif.
